# EUROPÄISCHE PATENTANMELDUNG

(11) **EP 3 563 735 A1**
(43) Veröffentlichungstag der Anmeldung: **06.11.2019**
(21) Anmeldenummer: 18170922.1
(22) Anmeldetag: 04.05.2018
(51) Int. Cl.: A47J 37/07

(54) **OUTDOOR-KOCHVORRICHTUNG**

(71) Anmelder: imoos ag, 9245 Oberbüren (CH)
(72) Erfinder: Moosmann, Norbert, 9245 Oberbüren (CH)
(74) Vertreter: Hepp Wenger Ryffel AG

(57) **Zusammenfassung**

Eine Outdoor-Kochvorrichtung (1) weist vier verschiedene Zubereitungseinheiten (10, 20, 30, 40) auf. Eine zweite Zubereitungseinheit (20) ist zwischen einer inaktiven Position (I2) und einer aktiven Zubereitungsposition (Z2) innerhalb eines Raums (7) einer Abdeckung (3) bewegbar. Eine erste Zubereitungseinheit (10) befindet sich in einer aktiven Zubereitungsposition (Z1) innerhalb des Raums (7).

## Beschreibung

Die Erfindung betrifft eine Outdoor-Kochvorrichtung mit den Merkmalen des Oberbegriffs der unabhängigen Patentansprüche.

Outdoor-Kochvorrichtungen sind in einer Vielzahl von unterschiedlichen Ausbildungsformen bekannt.

So ist es insbesondere bekannt, Kochvorrichtungen zum alternativen Zubereiten von Speisen durch Braten, Kochen oder Backen auszugestalten. Insbesondere sind Vorrichtungen bekannt, bei denen gleichzeitig ein Betrieb als Grill oder als Ofen, insbesondere zum Zubereiten von Pizzas, denkbar ist. Dazu ist es bekannt, in einen Grill zusätzliche Einsätze einzusetzen, welche der entsprechenden Zubereitungsform angepasst sind. WO 2009/036489 A1 zeigt eine Grillanordnung, bei der verschiedene Kocheinsätze eingesetzt werden können. Eine Grillvorrichtung mit einem Grilleinsatz und mit einem Pizzaeinsatz ist auch aus WO 2010/063992 A1, WO 2007/103524 A2 oder WO 2012/123875 A1 bekannt.

Diese Vorrichtungen sind aber alle aufwendig in der Handhabung und bedingen insbesondere den Einsatz von zusätzlichen Kocheinsätzen.

Aus EP 2 845 528 A2 ist eine Mehrzweckkochanordnung bekannt, bei der eine drehbar montierte Kocheinheit gleichzeitig die Verwendung als Grill, als Bratfläche und als Hochtemperaturstein zum Backen erlaubt. Diese Anordnung ist aber konstruktiv aufwendig und benötigt viel Raum.

Ein weiteres Problem bei solchen Kochvorrichtungen besteht darin, dass die Gefahr von Verbrennungen besteht, insbesondere beim Manipulieren der Speisen, beispielsweise beim Wenden von Grillgut oder beim Entnehmen von gebackener Pizza oder gebackenem Brot. Aus US 2014/0261012 A1 ist ein Grill bekannt, der eine Mehrzahl von Grillmodulen aufweist. Ein Grillrost ist bewegbar zwischen einer ersten Position über einem Heizelement und einer zweiten Position, die sich nicht über dem Heizelement befindet. Eine angelenkte Klappe erlaubt das teilweise Öffnen eines Grillraums. Durch Öffnen der Klappe wird aber ebenfalls ein Zugang zum Inneren des Grillraums freigegeben, wodurch die Gefahr von Verbrennungen besteht.

Es ist daher eine Aufgabe der vorliegenden Erfindung, die Nachteile des Bekannten zu vermeiden, insbesondere eine Kochvorrichtung zu schaffen, welche auf einfache Art und Weise die Verwendung für verschiedene Zubereitungsarten erlaubt und welche das Risiko von Verbrennungen verhindert.

Erfindungsgemäss werden diese und andere Aufgaben mit einer Kochvorrichtung mit den Merkmalen der unabhängigen Ansprüche gelöst.

Die erfindungsgemässe Kochvorrichtung weist wenigstens eine erste und wenigstens eine weitere Zubereitungseinheit auf. Die erste und die weitere Zubereitungseinheit sind zum Zubereiten von Speisen gemäss einer ersten und einer unterschiedlichen, weiteren Zubereitungsart ausgebildet. Die Kochvorrichtung weist einen gemeinsamen Zubereitungsraum auf, der von der ersten und der weiteren Zubereitungseinheit geteilt wird. Insbesondere weisen die erste und die weitere Zubereitungseinheit auch eine gemeinsame Heizvorrichtung auf. Es handelt sich vorliegend um eine Outdoor-Kochvorrichtung. Typischerweise ist die Heizvorrichtung daher ein Gasbrenner. Andere Heizvorrichtungen sind aber ebenfalls denkbar, insbesondere elektrische Heizvorrichtungen oder die Heizung mit Holz, Kohle oder einem Benzinvergaser.

Erfindungsgemäss sind mindestens Teile der weiteren Zubereitungseinheit innerhalb der Kochvorrichtung bewegbar und geführt zwischen einer aktiven Zubereitungsposition innerhalb des Zubereitungsraums und einer inaktiven Position ausserhalb des Zubereitungsraums angeordnet. Dank dieser Anordnung ist es auf einfache Art und Weise möglich, die Kochvorrichtung wahlweise in der ersten und der weiteren Zubereitungsart zu verwenden, indem die weitere Zubereitungseinheit zwischen ihrer aktiven und ihrer inaktiven Position bewegt wird. Aufgrund der geführten Anordnung ist der Wechsel zwischen den Zubereitungsarten einfach. Eine Entnahme von Zubereitungseinheiten oder Teilen davon ist nicht erforderlich. Es reicht eine Bewegung in die inaktive Position. Aufgrund der geführten Befestigung ist auch die Handhabung einfach.

Bevorzugt weist dazu die Kochvorrichtung eine erste Führung auf. Die bewegbare Zubereitungseinheit ist dann entlang dieser ersten Führung zwischen der inaktiven Position und der aktiven Zubereitungsposition verschiebbar. Die Verschiebung erfolgt insbesondere in einer horizontalen Richtung. Dadurch lassen sich auch verhältnismässig schwere Teile von Zubereitungseinheiten einfach und ohne grossen Kraftaufwand verschieben.

Bevorzugt weisen die erste und die weitere, bewegbare Zubereitungseinheit eine gemeinsame Abdeckung auf. Die Abdeckung umschliesst die bewegbare Zubereitungseinheit, wenn sich diese in der aktiven Zubereitungsposition befindet. Die Abdeckung ist insbesondere isoliert, sodass sich wie in einem Ofen hohe Temperaturen erzielen lassen.

Gemäss einer bevorzugten Ausführungsform weist die erste Zubereitungseinheit einen Grillrost auf und/oder die weitere, bewegbare Zubereitungseinheit ist als zweite Zubereitungseinheit mit einer Wärme speichernden Unterlage ausgebildet. Die wärmespeichernde Unterlage ist insbesondere ein Pizzastein. Durch ein Einschieben des Pizzasteins insbesondere innerhalb einer isolierten Abdeckung kann so ein Pizzaofen gebildet werden. Durch Entfernen des Pizzasteins aus der aktiven Zubereitungsposition innerhalb der gemeinsamen Abdeckung wird der Grillrost freigegeben und die Vorrichtung kann als herkömmlicher Grill verwendet werden. Der Pizzastein wird also in der aktiven Zubereitungsposition insbesondere oberhalb des Grillrosts angeordnet, sodass der Pizzastein gegen den Zubereitungsraum weist und der Grillrost zwischen Heizvorrichtung und Pizzastein liegt.

Besonders bevorzugt ist in diesem Zusammenhang die zweite Zubereitungseinheit beidseitig auf Führungsschienen geführt. Vor allem bei verhältnismässig schweren Zubereitungseinheiten wie wärmespeichernden Unterlagen, insbesondere Pizzasteinen, erlaubt eine beidseitige Führung ein einfaches Verschieben ohne das Risiko von Verkanten und ohne übermässige Reibung.

Vorteilhaft kann die Kochvorrichtung ausserdem eine dritte Zubereitungseinheit aufweisen, welche ebenfalls zwischen einer inaktiven Position und einer aktiven Zubereitungsposition bewegbar ist. Die dritte Zubereitungseinheit ist insbesondere verschwenkbar um eine Befestigung angeordnet. Typischerweise ist die dritte Zubereitungseinheit um eine horizontale Achse verschwenkbar.

Die Vorrichtung kann ausserdem einen Verriegelungsmechanismus aufweisen, mittels welchem die dritte Zubereitungseinheit in ihrer aktiven Position verriegelbar ist. Auf diese Weise kann die dritte Zubereitungseinheit in einer etwa horizontalen aktiven Zubereitungsposition verwendet werden und in einer hochgeklappten, etwa vertikalen, inaktiven Position verriegelt werden.

Die dritte Zubereitungseinheit weist typischerweise eine Zubereitungsplatte auf, auf welcher Speisen gebraten werden können. Insbesondere kann die dritte Zubereitungseinheit eine Plancha oder ein Wok sein.

Ausserdem kann die Kochvorrichtung eine vierte Zubereitungseinheit aufweisen, welche mit einem zweiten Grillrost versehen ist. Die dritte und die vierte Zubereitungseinheit können dann eine gemeinsame zweite Heizvorrichtung aufweisen.

Die erfindungsgemässe Kochvorrichtung kann ausserdem bevorzugt eine Zubereitungsfläche aufweisen. Die Zubereitungsfläche dient zum Bereitstellen der zuzubereitenden Speisen. Es ist auch denkbar, auf der Zubereitungsfläche Speisen zu verarbeiten, insbesondere zu schneiden oder zu marinieren. Die wärmespeichernde Unterlage der zweiten Zubereitungseinheit ist dabei in ihrer inaktiven Position bevorzugt unter der Zubereitungsfläche angeordnet. Dadurch lässt sich eine besonders platzsparende Ausbildung der Kochvorrichtung erzielen. Bevorzugt ist die Zubereitungsfläche ausserdem zentral zwischen dem ersten Grillrost der ersten Zubereitungseinheit und dem zweiten Grillrost der vierten Zubereitungseinheit angeordnet. Dadurch ergibt sich eine besonders ergonomische Anordnung bei Verwendung einer der insgesamt vier verschiedenen Zubereitungsanordnungen.

Ein weiterer Aspekt der Erfindung betrifft eine Kochvorrichtung mit wenigstens einer ersten Zubereitungseinheit zum Zubereiten von Speisen gemäss einer ersten Zubereitungsart. Die Kochvorrichtung weist eine Abdeckung auf, welche einen Raum umschliesst, innerhalb welchem die Speisen zubereitbar sind. Besonders bevorzugt weist die Kochvorrichtung gemäss diesem Aspekt auch eine wie vorstehend beschrieben ausgestaltete weitere Zubereitungseinheit auf. Es versteht sich aber, dass auch ohne eine solche weitere Zubereitungseinheit die nachfolgend erläuterten erfindungsgemässen Ausgestaltungen vorteilhaft sind.

Die Zubereitungseinheit weist eine Aufnahmefläche für die Speisen auf. Beispielsweise handelt es sich bei der Aufnahmefläche um eine wärmespeichernde Unterlage, beispielsweisen einen Pizzastein, um einen Grillrost oder um eine Bratfläche. Erfindungsgemäss ist die Aufnahmefläche in der Kochvorrichtung zwischen einer aktiven Zubereitungsposition und einer Handhabungsposition bewegbar befestigt. Die bewegbare Befestigung ist dabei derart ausgestaltet, dass die Aufnahmefläche mit einer darauf liegenden Speise ohne Öffnen der Abdeckung mindestens teilweise aus dem Raum für die Zubereitung der Speisen entfernbar ist. Insbesondere kann der Raum dabei als aus Steinen aufgebauter Raum eines Pizzaofens ausgestaltet sein. Durch die Möglichkeit der Entnahme der Speisen auf der Aufnahmefläche ohne Öffnung der Abdeckung ist die Gefahr von Verbrennungen reduziert. Gleichzeitigt besteht der Vorteil, dass die Wärme nicht aus dem durch Abdeckung eingeschlossenen Raum entweichen kann. Durch Bewegen der Aufnahmefläche in die Handhabungsposition besteht die Möglichkeit, Grillgut auf einem Grillrost (wenn die Zubereitungseinheit als Grill ausgestaltet ist) ausserhalb des Raums zu wenden, zusätzliche Zutaten (wenn die Zubereitungseinheit als Pizzaofen ausgebildet ist) auf eine teilweise fertig gebackene Pizza aufzulegen oder auch einfach die fertig zubereiteten Speisen von der Aufnahmefläche zu entnehmen und zu servieren. Aufgrund der Bewegbarkeit zwischen der aktiven Zubereitungsposition und der Handhabungsposition muss die Abdeckung nixht geöffnet werden können. Es ist daher auch denkbar, die Abdeckung massiv, insbesondere aus Steinen, aufzubauen.

Gemäss einer besonders bevorzugten Ausführungsform der Erfindung weist die Kochvorrichtung eine zweite Führung auf. Die Zubereitungseinheit oder Zubereitungseinheiten ist/sind in diesem Fall entlang der zweiten Führung zwischen der Handhabungsposition und der aktiven Zubereitungsposition verschiebbar.

Besonders bevorzugt weist die Kochvorrichtung ausserdem einen Verbindungsmechanismus auf, mittels welchem ein Befestigungsrahmen der Zubereitungseinheit lösbar mit einem Zugwagen verbindbar ist. Durch Lösen des Verbindungsmechanismus ist der Tragrahmen der Zubereitungseinheit vom Zugwagen trennbar und insbesondere von der ersten Führung an die zweite Führung übergebbar.

Durch diese in Art eines Wechseltisches ausgestaltete Verbindung lässt sich insbesondere ein Pizzastein von einer inaktiven Position ausserhalb des Zubereitungsraums entlang der ersten Führung in den Zubereitungsraum in eine aktive Zubereitungsposition verschieben. Durch Lösen des Verbindungsmechanismus lässt sich der Pizzastein innerhalb des Zubereitungsraums an die zweite Führung übergeben, sodass der Pizzastein entlang der zweiten Führung von der aktiven Zubereitungsposition in die Handhabungsposition bewegbar ist.

Wenn die Vorrichtung als Grill verwendet werden soll, bleibt der Pizzastein in der inaktiven Position. Ein Grillrost kann in diesem Fall von der aktiven Zubereitungsposition in die Handhabungsposition bewegt werden. Bevorzugt ist daher eine erste und eine zweite Zubereitungseinheit, insbesondere in Form eines Grills und einer wärmespeichernden Unterlage, entlang der zweiten Führung verschiebbar.

Die Erfindung wird nachfolgend in Ausführungsbeispielen und anhand der Zeichnungen näher erläutert. Es zeigen:
- Figur 1:: Eine Frontansicht einer erfindungsgemässen Kochvorrichtung mit einem Pizzastein in einer inaktiven Position;
- Figur 2:: Eine Frontansicht der Vorrichtung gemäss Figur 1 mit einem Pizzastein in einer aktiven Zubereitungsposition;
- Figur 3:: Eine Draufsicht auf die Vorrichtung gemäss Figur 1 mit einem Pizzastein in einer inaktiven Position und einem Grillrost in einer aktiven Zubereitungsposition;
- Figur 4:: Draufsicht gemäss Figur 3 mit einem Pizzastein in einer aktiven Zubereitungsposition;
- Figur 5:: Draufsicht gemäss Figur 3 mit einem Pizzastein in einer inaktiven Position und einem Grillrost in einer Handhabungsposition;
- Figur 6:: Draufsicht gemäss Figur 3 mit einem Pizzastein in einer Handhabungsposition;
- Figur 7:: Seitenansicht mit einer dritten Zubereitungseinheit in einer aktiven Zubereitungsposition;
- Figur 8:: Seitenansicht gemäss Figur 7 mit der dritten Zubereitungseinheit in einer inaktiven Position;
- Figur 9:: Detaillierte Darstellung der Halterung eines Pizzasteins in eine Ansicht von unten;
- Figur 10:: Detaillierte Darstellung des Verbindungsmechanismus zwischen einem Halterahmen und einem Zugwagen.

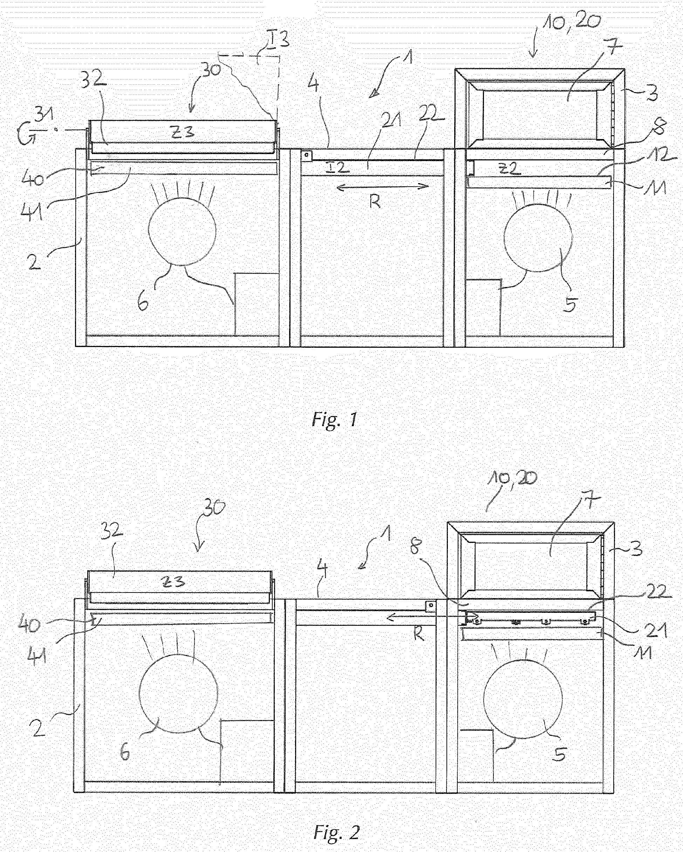

Figur 1 zeigt eine Kochvorrichtung 1 in einer Frontansicht. Die Kochvorrichtung 1 weist ein Gestell 2 auf. Das Gestell 2 ist typischerweise aus Edelstahl ausgebildet und bildet eine Art Tisch, welcher die verschiedenen, nachfolgend beschriebenen Zubereitungseinheiten trägt. Die Kochvorrichtung 1 weist eine zentrale Zubereitungsfläche 4 auf. Links der Zubereitungsfläche 4 befindet sich eine dritte Zubereitungseinheit 30 und eine vierte Zubereitungseinheit 40. Rechts der zentralen Zubereitungsfläche befindet sich eine erste Zubereitungseinheit 10 und eine zweite Zubereitungseinheit 20.

Eine erste Heizung 5 in Form eines Gasbrenners dient zum Heizen der ersten Zubereitungseinheit 10 und der zweiten Zubereitungseinheit 20. Eine zweite Heizung 6 ebenfalls in Form eines Gasbrenners dient zum Heizen der dritten Zubereitungseinheit 30 und der vierten Zubereitungseinheit 40. In Figur 1 sind zwei separate Gasflaschen für die beiden Heizungen 5, 6 dargestellt. Selbstverständlich ist es auch denkbar, die beiden Heizvorrichtungen 5, 6 mit einer gemeinsamen Gasflasche zu betreiben.

Die erste Zubereitungseinheit 10 ist als Grill ausgebildet. Dazu weist sie einen Grillrost 11 mit einer Oberfläche 12 zur Aufnahme von Grillgut auf. Die zweite Zubereitungseinheit 20 ist als Pizzastein 21 ausgebildet, welcher eine Aufnahmefläche 22 zur Aufnahme einer Pizza aufweist.

Die Kochvorrichtung 1 weist eine Abdeckung 3 auf, welche einen gemeinsamen Raum 7 für die erste Zubereitungseinheit 10 und die zweite Zubereitungseinheit 20 umschliesst. Die Abdeckung 3 ist typischerweise aus Schamottstein gebildet. Der Pizzastein 21 ist ebenfalls typischerweise als Schamottstein ausgebildet.

Die vierte Zubereitungseinheit 40 ist als zweiter Grill mit einem Grillrost 41 ausgebildet. Die dritte Zubereitungseinheit 30 ist als Plancha mit einer Platte 32 gebildet.

Wie in Figur 1 schematisch dargestellt, ist der Pizzastein 21 in einer Richtung R zwischen einer inaktiven Position I2 und einer Zubereitungsposition Z2 innerhalb des Raums 7 verschiebbar.

Die Platte 32 der dritten Kochvorrichtung ist um eine Achse 31 ebenfalls zwischen einer inaktiven Position I3 (nur schematisch angedeutet) und einer aktiven Position Z3 verschwenkbar.

Figur 1 zeigt den Pizzastein in der inaktiven Position I2 während Figur 2 den Pizzastein in der aktiven Zubereitungsposition Z2 zeigt.

Zur Entnahme des Rostes 11 oder des Pizzasteins 21 aus dem Raum 7 der Abdeckung 3 ist ein kleiner Schlitz 8 vorhanden, welcher eine ausreichende Höhe aufweist, um Grillrost 11 / Pizzastein 21 mit der darauf liegenden Speise in den Raum 7 ein- oder aus diesem auszuführen.

Die dritte Zubereitungseinheit 30 und die vierte Zubereitungseinheit 40 sind unabhängig von der ersten und der zweiten Zubereitungseinheit 10, 20. Die Kochvorrichtung 1 lässt sich daher auf der rechten Seite wahlweise als Grill oder als Pizzaofen und auf der linken Seite wahlweise als weiterer Grill oder als Plancha verwenden. Es können also zwei Vorrichtungen parallel zueinander verwendet werden. Selbstverständlich ist es aber auch denkbar, nur eine Zubereitungseinheit zu verwenden.

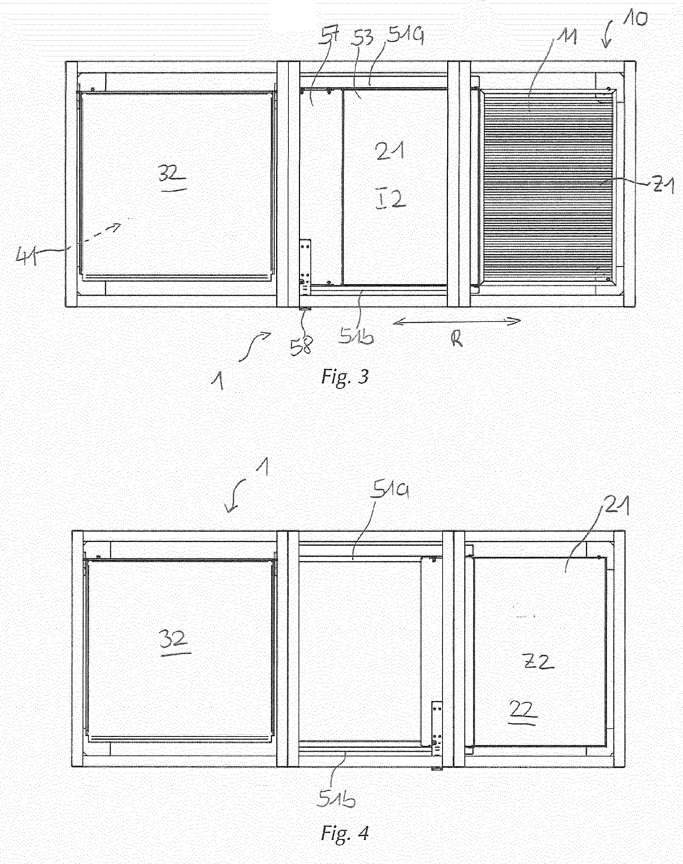

Die Figuren 3 bis 6 zeigen eine Draufsicht auf die Vorrichtung 1 gemäss Figuren 1 und 2 unter Weglassung der Abdeckung 3.

In Figur 3 ist die Plancha 32 heruntergeklappt. Unterhalb der Platte 32 der Plancha liegt der Grillrost 41 (nicht sichtbar in Figur 3) der zweiten Zubereitungseinheit 40. In Figur 3 ist ausserdem der Pizzastein 21 in der inaktiven Position I2 und der Grillrost 11 der ersten Zubereitungseinheit 10 in einer aktiven Zubereitungsposition Z1.

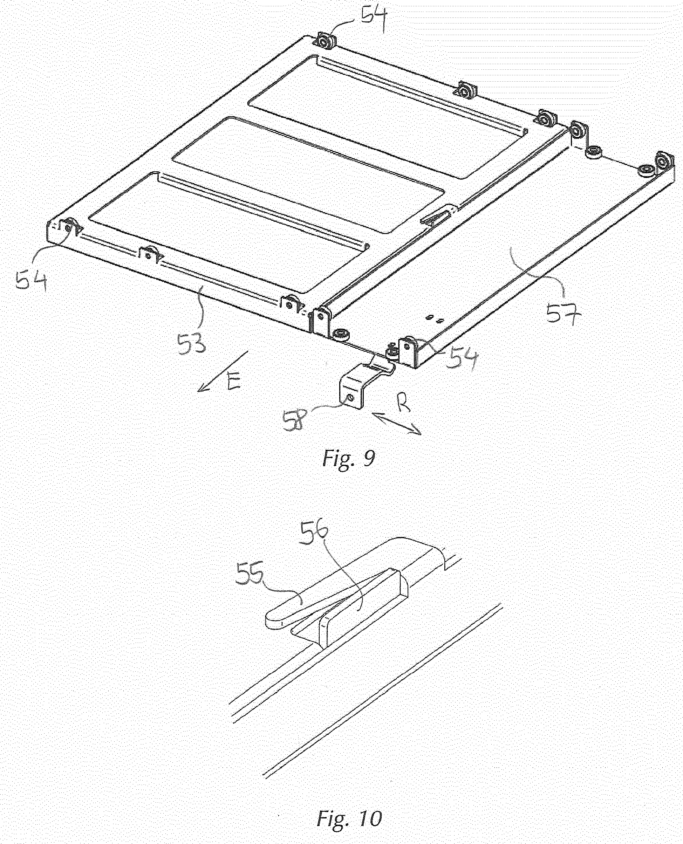

Der Pizzastein 21 ist in einem Halterahmen 53 gehalten (siehe auch Fig. 9). Der Halterahmen 53 ist mit einem Zugwagen 57 lösbar verbunden. Der Zugwagen 57 weist einen Betätigungsgriff 58 auf, mittels welchem die Einheit aus Zugwagen 57, Halterahmen 53 und Pizzastein 21 in Richtung R entlang von zwei seitlichen Führungsschienen 51a, 51b in die Zubereitungsposition Z2 innerhalb des Raums 7 verschiebbar ist.

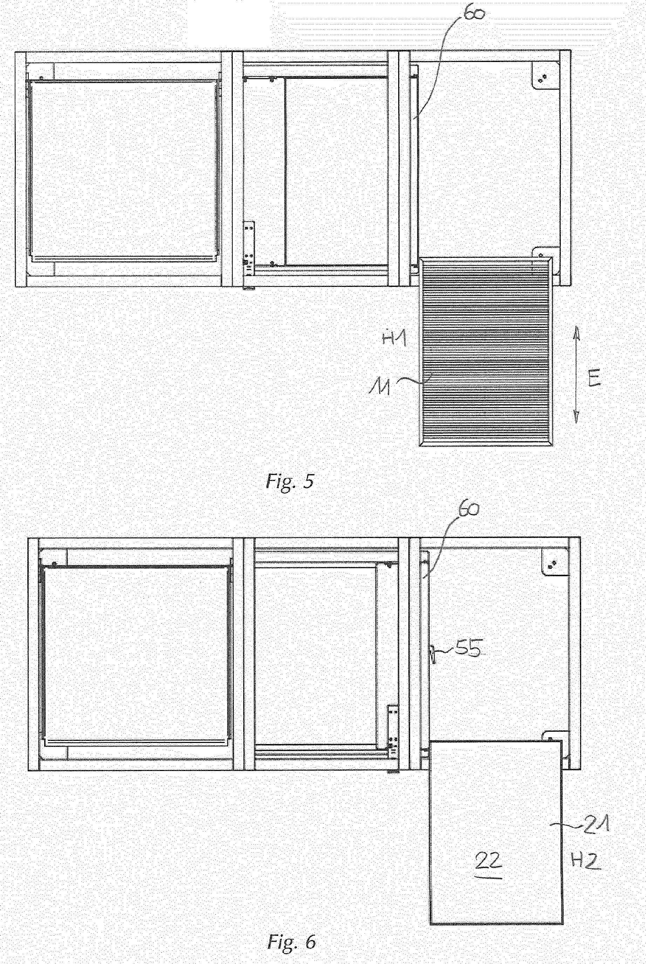

Wenn sich der Pizzastein 21 in der inaktiven Position I2 befindet, kann der Rost 11 in seiner aktiven Position Z1 betrieben werden. Zum Wenden oder Entnehmen von Grillgut kann der Rost 11 von seiner aktiven Zubereitungsposition Z1 in der Richtung E entlang einer Führung 60 in die erste Handhabungsposition H1 verschoben werden (siehe Figur 5).

Der Pizzastein 21 kann ebenfalls von seiner aktiven Zubereitungsposition Z2 in Richtung E entlang der Führung 60 in eine Handhabungsposition H2 verschoben werden (siehe Figur 6). In Figur 6 ist ausserdem schematisch ein Haken 55 gezeigt, mit dem der Pizzastein mit der Führung 51a, 51b verbunden ist.

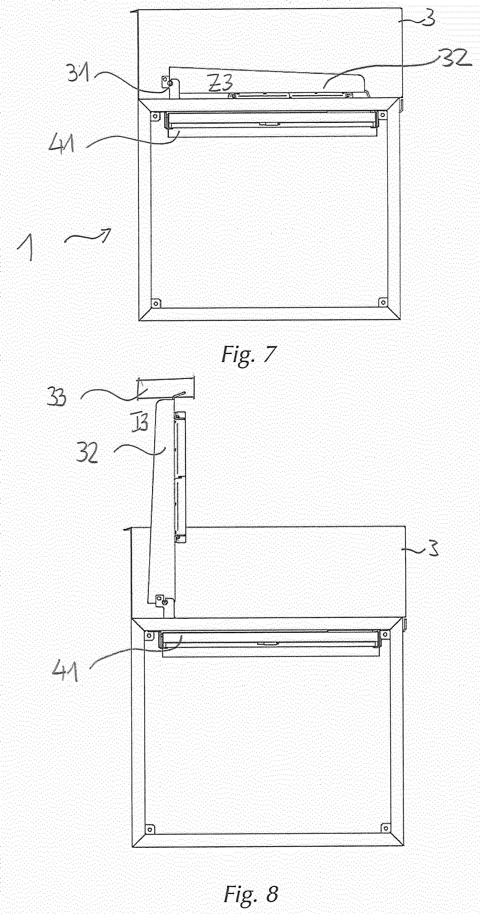

Figur 7 zeigt die Platte 32 in der aktiven Zubereitungsposition Z3. In dieser Position liegt die Platte 32 über dem Grill 41, welcher dadurch seine Funktion nicht wahrnimmt.

Figur 8 zeigt eine Seitenansicht der Kochvorrichtung 1. Gemäss Figur 8 ist der zweite Grillrost 41 der vierten Zubereitungseinheit 40 aktiv und die Platte 32 der dritten Zubereitungseinheit 30 ist um die horizontale Achse 31 hochgeklappt. Mit einem schematisch dargestellten Verriegelungsmechanismus 33 wird die Platte 32 in der inaktiven Position I3 gehalten.

Figur 9 und 10 zeigen Details zur Halterung und Führung des Pizzasteins 21 im Halterahmen 53.

Figur 9 zeigt (in einer detaillierten Ansicht von unten) den Halterahmen 53 zur Aufnahme des Pizzasteins (in Figur 9 nicht dargestellt). Auf der in Montagelage unteren Seite des Halterahmens 53 (in Figur 9 oben dargestellt) sind Rollen 54 angebracht. Mit den Rollen 54 lässt sich der Halterahmen 53 entlang der Schienen 51a, 51b verschieben. Der Halterahmen 53 ist mit einem Zugwagen 57 verbunden. Der Zugwagen 57 weist ebenfalls Rollen 54 auf, auf welchen er entlang der Schienen 51a, 51b verschiebbar ist. Der Zugwagen 57 weist einen Betätigungsgriff 58 auf, mittels welchem sich der Zugwagen 57 und der damit verbundene Rahmen 53 in der Richtung R (siehe Figuren 1 und 2) verschieben lässt. Der Zugwagen 57 und der Halterahmen 53 sind über einen Mechanismus aus einem Haken 55 und einem Anschlag 56 miteinander lösbar verbunden (siehe Figur 10). Der Anschlag 56 ist fest mit dem Halterahmen 53 verbunden. Der Haken 55 ist mit dem Zugwagen 57 verbunden. Wenn der Zugwagen 57 durch Betätigen des Handgriffs 58 in der Richtung R (siehe Figuren 1 und 2) von der inaktiven Position I2 in die Zubereitungsposition Z bewegt wird, bewegt sich der mit dem Zugwagen 57 verbundene Halterahmen 53 mit. Wenn die Einheit aus Zugwagen 57 und Halterahmen 53 sich in der Zubereitungsposition Z2 befindet, lässt sich der Halterahmen 53 durch Bewegung in Entnahmerichtung E so bewegen, dass der Anschlag 56 ausser Eingriff mit dem Haken 55 gerät.

Mit dem Betätigungsgriff 58 lässt sich ausserdem ein in Figur 9 und 10 nicht gezeigter Verriegelungsbolzen betätigen, der den Zugwagen 57 in seiner Position in der Zubereitungsposition Z2 behält, so dass - wenn der Halterahmen sich in der Handhabungsposition H2 befindet - nicht versehentlich der Zugwagen 57 aus der Position Z2 wegbewegt wird. Durch Zurückschieben des Rahmens 53 in die Zubereitungsposition Z2 verbinden sich der Haken 55 und der Anschlag 56 wieder, sodass der Halterahmen 53 durch Betätigen des Betätigungshebels 58 sich wieder in die inaktive Position I2 verschieben lässt.

Die Rollen 54 weisen insbesondere Kugellager auf, welche auch bei einem verhältnismässig schweren Stein 21 ein einfaches Verschieben ermöglichen.

Mit der erfindungsgemässen Vorrichtung 1 ist es auch möglich, in Sequenz mehrere Speisen zuzubereiten und dazu die Restwärme auszunützen. Beispielsweise ist es denkbar, in einem ersten Schritt die rechte Seite der Vorrichtung 1 als Grill zu verwenden, wobei eine erste Temperatur eingestellt wird. Anschliessend kann die Temperatur erhöht werden, der Raum 7 innerhalb der Abdeckung 3 auf eine Maximaltemperatur gebracht und die Einheit durch Verwendung des Pizzasteins 21 zum Zubereiten einer Pizza verwendet werden. Anschliessend kann die Restwärme verwendet werden, um beispielsweise mit dem Pizzastein 21 Brot zu backen.

## Patentansprüche

1. Outdoor-Kochvorrichtung (1), mit wenigstens einer ersten Zubereitungseinheit (10, 40) und einer weiteren Zubereitungseinheit (20, 30) zum Zubereiten von Speisen gemäss einer ersten und einer weiteren Zubereitungsart, wobei die erste und die weitere Zubereitungseinheit (10, 20, 30, 40) einen gemeinsamen Zubereitungsraum (7) und insbesondere eine gemeinsame Heizvorrichtung (5, 6) aufweisen,
**dadurch gekennzeichnet, dass** mindestens Teile der weiteren Zubereitungseinheit (20, 30) in der Kochvorrichtung geführt zwischen einer aktiven Zubereitungsposition (Z2, Z3) im Zubereitungsraum (5) und einer inaktiven Position (I2, I3) ausserhalb des Zubereitungsraums bewegbar angeordnet sind.

2. Kochvorrichtung (1) nach Anspruch 1, wobei die Kochvorrichtung (1) eine erste Führung (5) aufweist und die bewegbare Zubereitungseinheit (20) entlang der ersten Führung (50) zwischen der inaktiven Position (I2) und der aktiven Zubereitungsposition (Z2) verschiebbar ist, insbesondere in einer horizontalen Richtung (R).

3. Kochvorrichtung nach einem der Ansprüche 1 oder 2, wobei die erste und die bewegbare Zubereitungseinheit (10, 20) eine gemeinsame Abdeckung (3) aufweisen, wenn die bewegbare Zubereitungseinheit (20) in der aktiven Zubereitungsposition (2) ist.

4. Kochvorrichtung nach einem der Ansprüche 1 bis 3, wobei die erste Zubereitungseinheit einen Grillrost (11) aufweist und/oder die bewegbare Zubereitungseinheit als zweite Zubereitungseinheit (20) mit einer wärmespeichernden Unterlage, insbesondere einem Pizzastein (21) ausgebildet ist.

5. Kochvorrichtung nach Anspruch 2 und 4, wobei die zweite Zubereitungseinheit (20) beidseitig auf Führungsschienen (51a, 51b) geführt ist.

6. Kochvorrichtung nach einem der Ansprüche 1 bis 5, wobei die Kochvorrichtung (1) eine dritte Zubereitungseinheit (30) aufweist, die um eine Befestigung (31) zwischen einer inaktiven Position (I3) und einer aktiven Zubereitungsposition (Z3) verschwenkbar ist.

7. Kochvorrichtung nach Anspruch 6, wobei die dritte Zubereitungseinheit (30) um eine horizontale Achse (31) verschwenkbar ist und wobei die Kochvorrichtung (1) einen Verriegelungsmechanismus (32) aufweist, mittels welchem die dritte Zubereitungseinheit (30) in der inaktiven Position (I3) verriegelbar ist.

8. Kochvorrichtung nach einem der Ansprüche 6 oder 7, wobei die dritte Zubereitungseinheit (30) eine Zubereitungsplatte (32), insbesondere eine Plancha oder einen Wok, aufweist und wobei die Kochvorrichtung eine vierte Zubereitungseinheit (40) mit einem zweiten Grillrost (41) aufweist und wobei die dritte und die vierte Zubereitungseinheit (30, 40) eine gemeinsame zweite Heizvorrichtung (6) aufweisen.

9. Kochvorrichtung nach einem der Ansprüche 4 bis 8, wobei die Kochvorrichtung (1) eine Zubereitungsfläche (4) aufweist, wobei die wärmespeichernde Unterlage (21) der zweiten Zubereitungseinheit (20) in der inaktiven Position (I2) unter der Zubereitungsfläche (4) angeordnet ist und wobei insbesondere die Zubereitungsfläche (4) zentral zwischen dem ersten und einem zweiten Grillrost (11, 41) angeordnet ist und.

10. Kochvorrichtung, insbesondere gemäss einem der Ansprüche 1 bis 9, mit wenigstens einer ersten Zubereitungseinheit (10, 20) zum Zubereiten von Speisen gemäss einer ersten Zubereitungsart und mit einer Abdeckung (3), welche einen Raum (7) umschliesst, innerhalb welchem die Speisen zubereitbar sind,
wobei die Zubereitungseinheit (10, 20) eine Aufnahmefläche (12, 22) für die Speisen aufweist,
**dadurch gekennzeichnet, dass** die Aufnahmefläche (12, 22) in der Kochvorrichtung zwischen einer aktiven Zubereitungsposition (Z1, Z2) und einer Handhabungsposition (H1, H2) derart bewegbar befestigt ist, dass die Aufnahmefläche (12, 22) mit einer daraufliegenden Speise ohne Öffnen der Abdeckung (3) mindestens teilweise aus dem Raum (7) entfernbar ist.

11. Kochvorrichtung nach Anspruch 10, wobei die Kochvorrichtung (1) eine zweite Führung (6) aufweist und die Zubereitungseinheit (10, 20) entlang der zweiten Führung (60) zwischen der Handhabungsposition (H1, H2) und der aktiven Zubereitungsposition (Z1, Z2) verschiebbar ist.

12. Kochvorrichtung nach Anspruch 11, wobei die Kochvorrichtung (1) einen Verbindungsmechanismus (55,56) aufweist, mittels welchem ein Befestigungsrahmen (53) der Zubereitungseinheit (20) lösbar mit einem Zugwagen (57) verbindbar ist, wobei der Befestigungsrahmen (53) der Zubereitungseinheit (20) durch Lösen des Verbindungsmechanismus (55,56) vom Zugwagen (57) trennbar ist und insbesondere von der ersten Führung (50) an die zweite Führung (60) übergebbar ist.

13. Kochvorrichtung nach Anspruch 12, wobei eine erste Zubereitungseinheit, insbesondere ein Grillrost (11) und eine zweite Zubereitungseinheit, insbesondere ein Pizzastein (21) wahlweise entlang der zweiten Führung (60) zwischen einer Zubereitungsposition (Z1, Z2) und einer Handhabungsposition (H1, H2) verschiebbar sind.

14. Kochvorrichtung nach einem der Ansprüche 3 bis 13, wobei die Abdeckung (3) eine thermische Isolierung aufweist.
